# EUROPEAN PATENT APPLICATION

(11) **EP 2 175 649 A1**
(43) Date of publication of application: **14.04.2010**
(21) Application number: 08305647.3
(22) Date of filing: 07.10.2008
(51) Int. Cl.: H04N 7/16

(54) **Method and device for authorising access to data**

(71) Applicant: Alcatel Lucent, 75008 Paris (FR)
(72) Inventor: Villagas Nunez, Alvaro, 28033, Madrid (ES); Robinson, David Cecil, Aldbourne, Wiltshire SN8 2NP (GB)
(74) Representative: BiiP cvba

(57) **Abstract**

The present invention is related to a device for authorising access to data content protected by a control signal (CW) and delivered to a terminal over a network comprising an access network. The device is arranged for receiving a version of the control signal and further comprises processing means for processing the received version of the control signal and arranged for sending to the terminal an output signal derived from that processed version of the control signal. Said output signal enables the terminal to get access to the delivered data content protected by the control signal. The device is **characterised in that** it is operable in the access network.

## Description

### Field of the Invention

The present invention generally relates to the field of conditional access systems and digital rights management solutions.

### Background of the Invention

All mechanisms for protection of multimedia content delivery (conditional access systems or digital rights management) that are based on content encryption require a secure client at the terminal side which is usually the weakest link of the chain in terms of security. For getting a rich and scalable feature set, it is desirable that this secure client include a good level of intelligence, but the complexity this introduces usually leads to weakness in the implementation from the security point of view.

Prior art solutions implement the secure client on some kind of specialized hardware (e.g. a smartcard) which is designed to be tamper resistant. An important drawback of this approach is the cost of the additional hardware (i.e., capital expenditures) and management of smart card distribution (causing operational expenditures). Additionally, the solution is exposed to security attacks and may eventually be hacked, because of its risky environment (it is physically in hands of the potential attackers). The existing approach is to periodically replace smartcards before the number of cracked cards reaches a damaging level further raising the capital and operational expenditure costs.

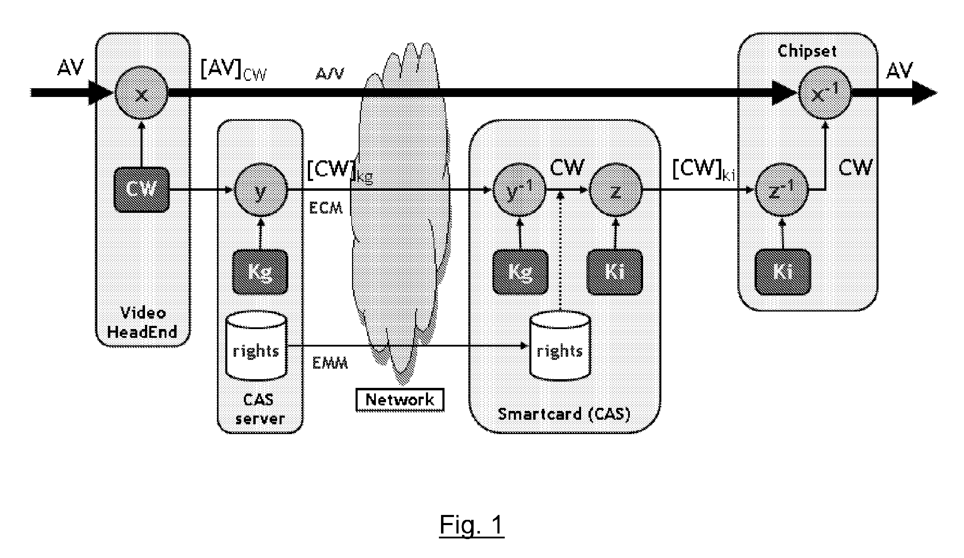

Fig.1 represents the architecture of a typical conditional access solution based on a smartcard (whereby the AV chipset in the terminal is assumed to include security features). The Audio/Video stream (AV) is encrypted with a key (CW) which is the same for all terminals. The encryption key itself is also sent to all terminals encrypted within an Encryption Control Message (ECM). The smartcard, physically collocated with the chipset in the set top box, stores the required data for extracting the encryption key from the ECM; the smartcard then decides if the key should be delivered (in encrypted format, with a local unique key Kᵢ) to the chipset depending on the local rights stored in the same card. This local decision capability provides a high flexibility and multiple business models.

The products currently available on the conditional access system market can roughly be divided in three types. Smartcard based solutions offer a very good security and allow complex business models like Impulse Pay per View, Pay Per Time, etc... (see below), but are very expensive. Further the smartcard can be hacked (although not easy, yet always feasible). Logistics is also an issue with Smartcards. Second there are pure software-based solutions. These emulate the functionality of a smartcard (including the local decision capability and hence the complex business models) on a software module in the set top box (STB). Their functionality is similar to the smartcard based product, but security is an order of magnitude worse. Price, of course, is also much lower. Thirdly there are smartcard-less hardware solutions. This is typically offered by the smartcard based solution providers as a lower cost alternative. They make extensive usage of the bidirectional network to provide massive amounts of keys to all subscribers, relying on the (limited) security capabilities of the STB chipsets. This solution is as secure as the smartcard (or even more, as there is no physical device to attach other than the STB), but lacks the local decision capability and therefore the complex business models.

### Aims of the invention

The present invention aims to provide a device for authorising access to data content with improved security while maintaining a high level of flexibility at a reasonable price.

### Summary

The present invention relates to a device for authorising access to data content protected by a control signal and delivered to a terminal over a network comprising an access network. The device is arranged for receiving a version of the control signal and further comprises processing means for processing the received version of the control signal and arranged for sending to the terminal an output signal derived from the processed version of the control signal. The output signal enables the terminal to get access to the delivered data content protected by the control signal. The device is operable in the access network. In this way the need for smartcards in the set top box is eliminated, which considerably reduces the deployment cost.

Preferably the version of the control signal is obtained by encryption. In an advantageous embodiment said version of the control signal is an Encryption Control Message.

In a preferred embodiment the processing means is arranged for decrypting the version of the control signal. The processing means is further advantageously arranged for encrypting the output signal. The output signal is preferably encrypted with a code specific for the terminal.

In another preferred embodiment the device is arranged for receiving information about the terminal being entitled or not to access the data content. Said information is advantageously contained in an entitlement management message.

The data content is typically multimedia data.

In another aspect the invention relates to an access node comprising a device for authorizing access as previously described. The access node may advantageously be a DSL access multiplexer (DSLAM).

In yet a further aspect the invention relates to a conditional access system comprising a device for authorising access as disclosed above and further comprising a device arranged for protecting data content to be delivered with a control signal and for transmitting the protected data content, and comprising at least one terminal connected with the device for protecting data content via a network provided with an access network and with the device for authorising access.

The conditional access system advantageously comprises means for encrypting the control signal.

In a further aspect the invention relates to a method for improving the security of a conditional access system. The conditional access system comprises a device arranged for protecting data content to be delivered with a control signal and for transmitting the protected data content, and also comprises at least one terminal connected with the device for protecting data content via a network provided with an access network. The method comprises the step of providing a device for authorising access as previously described in the access network, whereby the device for authorising access is connected with the at least one terminal.

### Brief Description of the Drawings

Fig. 1 illustrates an architecture of a conditional access solution as known in the prior art.

Fig. 2 illustrates the solution according to the present invention and its architecture.

### Detailed Description of Embodiment(s)

The present invention proposes to implement the secure client with complex functionality on a device in the access network, out of the physical reach of the end user, but close enough to the terminal to still enable a fast and secure data exchange with the terminal, thus enabling the kind of local decisions that a smartcard or equivalent solution provides. These local decisions enable some business models that are not possible otherwise, like Impulse Pay per View (purchasing of content locally, without communicating in real time with a call center or a central computer), Pay per Time (consuming minutes of content when the subscriber prefers) and others.

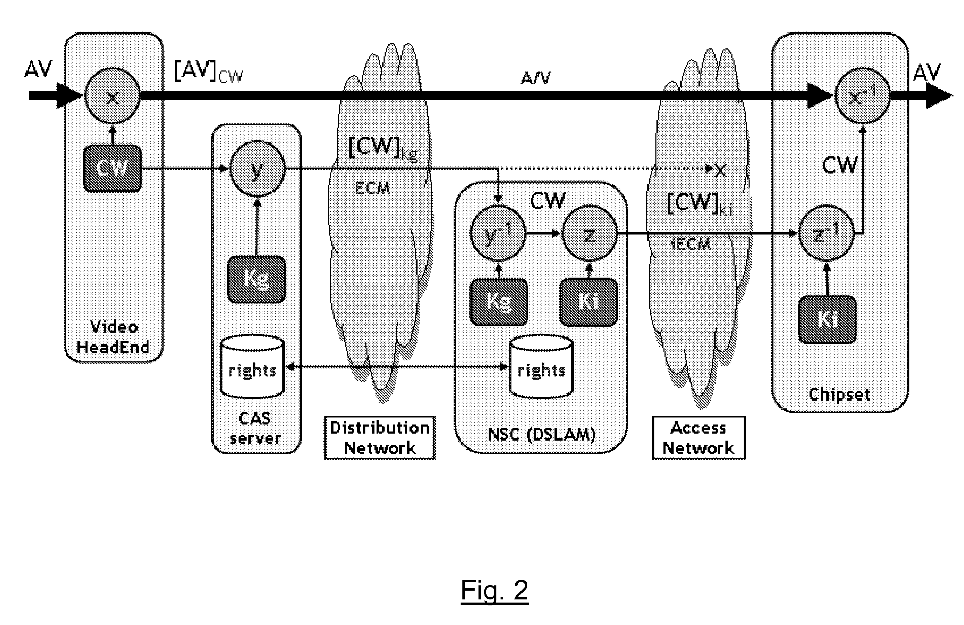

According to an embodiment of the invention the terminal processing of the conditional access system (CAS) and DRM is moved into the access node. This has no impact on the CAS system as illustrated in Fig.2. As usual the video headend scrambles the AV stream using the randomly generated control word (CW). The scrambled AV stream is delivered to the terminal through the core and access networks. Additionally, the control word is encrypted by the CAS headend and delivered to the access node by means of an ECM message. Separately, the rights to access the AV stream may be delivered to the access node. There are several mechanisms for doing this, including entitlement management messages (EMMs) which are encrypted messages addressed to particular subscribers (or groups of subscribers) containing positive or negative entitlements (access permissions) for particular sets of contents. These messages are encrypted with unique keys and delivered either in band with the content or using a parallel path through the network. For each user having the right to receive the AV stream, the access node decrypts the ECM using Kg and re-encrypts with a private key for the clients terminal Kᵢ. This enables the client to recover the control word CW and to descramble the AV stream. However, if the client does not have the rights, the CW is not re-encrypted and forwarded to the client's terminal. Hence, it is not exposed to be cracked.

The device for authorizing access according to the present invention can be considered as a "networked smartcard" (NSC) (see Fig.2), which is hosted in an appliance in the access network. It may be a service blade on a DSLAM or a separate device collocated with the DSLAM. Functionally it behaves exactly like a physical smartcard: it can extract the A/V decryption key (CW) from the ECMs, take local decisions depending on a database containing information on access rights and provide the key (encrypted) to the chipset. ECMs may be got directly by the "networked smartcard" (NSC) as in Fig.3 or they can alternatively be gathered by the STB (dotted arrow in Fig.3) and forwarded by it to the NSC. All business models enabled by a smartcard solution (e.g. subscription, Pay per View, Impulsive Purchases, Pay per time, Personal Video Recorder, etc.) are possible, with the major advantage that the smartcard is not present at home and therefore cannot be hacked. What is being leveraged with this solution is the presence of the local link through the access network between the set top box and the DSLAM premises. This link provides the scalability and flexibility of pure local solutions with the big advantage of locating the critical security element out of the risky subscriber environment.

The device for authorizing access to data content as in the present invention scales with the number of subscribers, but given the low computing power required by these functions (equivalent to the processing power of a smartcard) and the resource sharing capability that may be leveraged, the overall cost is lower than the prior art smartcard solution.

The device for authorizing access of the invention provides the same flexibility as a hardware based (smartcard or equivalent) conditional access system, but without any specialized hardware in the terminal. It reuses the basic security components built into descrambler/decoder chipsets. It provides improved security, because the secure appliance (i.e. the 'networked smartcard') is physically not reachable by potential attackers.

The present invention can be applied to existing CAS systems without any change to the headend. It keeps full compatibility with existing conditional access systems: it is even possible to have in the field some set top boxes with traditional smartcards and others using networked smartcards (the access node devices), all working with the same signal coming from the headend (encrypted content, ECMs and EMMs). This also means that the solution may be applied gradually to an already existing (and deployed) conditional access system.

The invention further makes management and maintenance of the solution easier, because the appliance is located in the network premises (no visits to the subscribers' homes). Also, it reduces the cost of a deployment by reducing the CAS / DRM investment needed in the set top box to integrate the conditional access functionality and eliminates the need for smartcards. This reduces both the capital and operational expenditure costs.

With respect to smartcard based architectures, the invention provides better security, easier management and upgradeability and lower cost in the midterm.

As compared to pure software CAS/DRM architecture, the proposed solution provides better flexibility, more business models (e.g. impulsive Pay Per View or Pay per Time) and better security.

Concerning the DRM interoperability initiatives that exist in the market (e.g. Coral - see e.g; http://www.coral-interop.org), it should be noted that the present invention offers a better security (because all risky tasks are undertaken in a secure environment) and much better performance and scalability (because of the close distance of the appliance to the terminal).

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Device for authorising access to data content protected by a control signal (CW) and delivered to a terminal over a network comprising an access network, said device being arranged for receiving a version of said control signal, said device further comprising processing means for processing said received version of said control signal and arranged for sending to said terminal an output signal derived from said processed version of said control signal, said output signal enabling said terminal to get access to said delivered data content protected by said control signal, **characterised in that** said device is operable in said access network.

2. Device for authorising access as in claim 1, whereby said version of said control signal is obtained by encryption.

3. Device for authorising access as in claim 2, whereby said version of said control signal is an Encryption Control Message.

4. Device for authorising access as in claim 1 or 2, whereby said processing means is arranged for performing decryption.

5. Device for authorising access as in any of claims 1 to 3, whereby said processing means is arranged for encrypting said output signal.

6. Device for authorising access as in claim 4, wherein said output signal is encrypted with a code specific for said terminal.

7. Device for authorising access as in any of the previous claims, whereby said device is arranged for receiving information about said terminal being entitled or not to access said data content.

8. Device for authorising access as in claim 7, wherein said information is contained in an entitlement management message.

9. Device for authorising access as in any of the previous claims, whereby said data content is multimedia data.

10. Access node comprising a device for authorising access as in any of claims 1 to 9.

11. Conditional access system comprising a device for authorising access as in any of claims 1 to 9 and further comprising a device arranged for protecting data content to be delivered with a control signal and for transmitting the protected data content, and comprising at least one terminal connected with said device for protecting data content via a network provided with an access network and with said device for authorising access.

12. Conditional access system as in claim 11, further comprising means for encrypting said control signal.

13. Method for improving the security of a conditional access system comprising a device arranged for protecting data content to be delivered with a control signal and for transmitting the protected data content, and comprising at least one terminal connected with said device for protecting data content via a network provided with an access network, **characterised in that** said method comprises the step of providing a device for authorising access as in any of claims 1 to 9 in said access network, such that said device for authorising access is connected with said at least one terminal.

## Amended claims

### Amended claims in accordance with Rule 137(2) EPC.

**1.** Device for authorising access to data content protected by a control signal (CW) and delivered to a terminal over a network comprising an access network, said device being arranged for receiving a version of said control signal, said device further comprising processing means for processing said received version of said control signal and arranged for deciding, based on information on access rights, on sending to said terminal an output signal derived from said processed version of said control signal, said output signal enabling said terminal to get access to said delivered data content protected by said control signal, **characterised in that** said device is operable in said access network.

**2.** Device for authorising access as in claim 1, whereby said version of said control signal is obtained by encryption.

**3.** Device for authorising access as in claim 2, whereby said version of said control signal is an Encryption Control Message.

**4.** Device for authorising access as in claim 1 or 2, whereby said processing means is arranged for performing decryption.

**5.** Device for authorising access as in any of claims 1 to 3, whereby said processing means is arranged for encrypting said output signal.

**6.** Device for authorising access as in claim 4, wherein said output signal is encrypted with a code specific for said terminal.

**7.** Device for authorising access as in any of the previous claims, whereby said device is in connection with a database containing said information on access rights.

**8.** Device for authorising access as in any of the claims 1 to 6, whereby said device is arranged for being delivered with said information about said terminal being entitled or not to access said data content.

**9.** Device for authorising access as in claim 7 or 8, wherein said information is contained in an entitlement management message.

**10.** Device for authorising access as in any of the previous claims, whereby said data content is multimedia data.

**11.** Access node comprising a device for authorising access as in any of claims 1 to 10.

**12.** Conditional access system comprising a device for authorising access as in any of claims 1 to 10 and further comprising a device arranged for protecting data content to be delivered with a control signal and for transmitting the protected data content, and comprising at least one terminal connected with said device for protecting data content via a network provided with an access network and with said device for authorising access.

**13.** Conditional access system as in claim 12, further comprising means for encrypting said control signal.

**14.** Method for improving the security of a conditional access system comprising a device arranged for protecting data content to be delivered with a control signal and for transmitting the protected data content, and comprising at least one terminal connected with said device for protecting data content via a network provided with an access network, **characterised in that** said method comprises the step of providing a device for authorising access as in any of claims 1 to 10 in said access network, such that said device for authorising access is connected with said at least one terminal.
